# EUROPEAN PATENT APPLICATION

(11) **EP 4 098 680 A1**
(43) Date of publication of application: **07.12.2022**
(21) Application number: 21177674.5
(22) Date of filing: 04.06.2021
(51) Int. Cl.: C08G 59/66, C09D 133/06, C09D 163/00, C09J 133/06, C09J 163/00

(54) **DUAL CURING COMPOSITION BASED ON ACRYLATE FUNCTIONAL COMPOUNDS**

(71) Applicant: Henkel AG & Co. KGaA, 40589 Düsseldorf (DE)
(72) Inventor: CHEN, Chunfu, Kanagawa Prefecture, 211-0067 (JP)

(57) **Abstract**

The present application is directed to a dual curing composition which may be cured at room temperature but which is also heat- and photo-curable, said composition comprising, based on the weight of the composition: from 10 to 95 wt.% of a) at least one epoxy acrylate compound having at least two acrylate groups; and, from 5 to 90 wt.% of b) at least one polythiol compound, wherein the composition is characterized in that the molar ratio of thiol groups (-SH) to acrylate groups (H₂C=CHC(O)O-) is in the range from 0.2:1 to 1:1, preferably from 0.5:1 to 1:1. The composition may be further characterized as being free from free-radical initiators.

## Description

### FIELD OF THE INVENTION

The present disclosure is directed to a dual curing composition. More particularly, the present disclosure is directed to a composition which may be cured either at room temperature or by using actinic radiation and / or heat, which composition comprises an epoxy acrylate monomer and a thiol-functional compound.

### BACKGROUND TO THE INVENTION

Compositions, such as coating compositions, which are curable by actinic radiation can conventionally be cured relatively quickly by exposure to a radiation source. The fast cure of the compositions allows manufacturers to increase throughput in, for instance, industrial coating processes. However, many coated substrates will possess areas which cannot easily be exposed to actinic radiation: it can, for example, be difficult to completely expose conformal coatings applied to the surfaces of circuit boards and electronic components because those surfaces are often highly contoured. This difficulty of exposing an applied composition to actinic radiation leads to the problem that a portion of the composition applied in "*shadow*" areas will remain uncured.

The present disclosure seeks to address the problem of attaining complete curing - throughout regions which are not illuminated by an incident initiating light source - for photocurable compositions which are based on acrylate functional compounds. This problem has previously been addressed in the art through the provision of compositions which, in addition to being curable under exposure to actinic radiation, can also be cured upon exposure to heat. Such compositions are referred to as being dual-curing.

US2007029034 A1 (Mgaya et al.) discloses a dual cure adhesive composition comprising: a) a water-based emulsion of at least one vinyl ester homo-polymer or co-polymer; b) at least one (meth)acrylate-functionalized monomer and / or oligomer capable of being polymerized and / or crosslinked by exposure to ultraviolet or visible light; and, c) at least one photoinitiator.

US Patent No. 10174146B2 (Morin et al.) discloses a dual curing composition which is applied using the method steps of: a) mixing at least one polymerizable acrylic compound, a thermal initiator, a photoinitiator, and a peroxide to form a mixture, wherein the peroxide has a decomposition temperature; b) exposing the mixture to light for a sufficient first time to generate a first curing agent; and, c) after exposing the mixture to light, exposing the mixture to a temperature below the decomposition temperature of the peroxide for a sufficient second time to generate a second curing agent.

WO/2013/023545 (Henkel China Company Ltd.) discloses a dual cure adhesive composition which comprises, based on the total weight of the adhesive composition: 10-90 wt.% of photo-curable oligomer or polymer having pendant (meth)acryloxy or vinyl groups; 5-55 wt.% of (meth)acrylate; 0-50 wt.% of liquid polybutadiene; 0.5-5 wt.% of an UV-photoinitiator; and, 0.5-5 wt.% of a thermal initiator.

KR 102155180 B1 (KCC Corporation) describes a dual curing adhesive composition which is capable of light curing and heat curing, said adhesive composition comprising: an epoxy (meth)acrylate oligomer; a polyol (meth)acrylate oligomer; a (meth)acrylate monomer; a photoinitiator; and, a thermal initiator.

The presence of photoinitiator(s) in these prior art compositions should be noted. Further, the skilled artisan would be aware that working examples of such prior art compositions will commonly include photosensitizers in order to improve the efficiency with which the photoinitiator uses the energy delivered, by either increasing the rate of the photoinitiated polymerization or by shifting the wavelength at which polymerization occurs. Photoinitiators and, where applicable, photosensitizer(s) may produce residue compounds from the photochemical reaction in the final cured product. These residues may be detected by conventional analytical techniques such as: infrared, ultraviolet and NMR spectroscopy; gas or liquid chromatography; and, mass spectroscopy. Thus, the prior art compositions may comprise cured matrix (co-)polymers and detectable amounts of residues from at least the photoinitiator.

### STATEMENT OF THE INVENTION

In accordance with a first aspect of the invention, there is provided a dual curing composition which is curable at room temperature but which is also both heat- and photo-curable, said composition comprising, based on the weight of the composition:
from 10 to 95 wt.% of a) at least one epoxy acrylate compound having at least two acrylate groups; and,
from 5 to 90 wt.% of b) at least one polythiol compound,
wherein the composition is characterized in that the molar ratio of thiol groups (-SH) to acrylate groups (H₂C=CHC(O)O-) is in the range from 0.2:1 to 1:1.

In an embodiment, the dual curing composition comprises, based on the weight of the composition:
from 20 to 90 wt.%, preferably from 40 to 90 wt.% a) said at least one epoxy acrylate compound having at least two acrylate groups;
from 10 to 80 wt.%, preferably from 10 to 60 wt.% of b) said at least one polythiol compound; and,
from 0 to 50 wt.%, preferably from 0 to 30 wt.% of c) at least one ethylenically unsaturated non-ionic monomer,
wherein the composition is characterized in that the molar ratio of thiol groups (-SH) to acrylate groups (H₂C=CHC(O)O-) is the range from 0.2:1 to 1:1 and preferably in the range from 0.5:1 to 1:1.

The dual curing compositions should be substantially free of free-radical photoinitiators and / or thermal free-radical initiators. Indeed, effective compositions according to the present disclosure which are free of both thermal free-radical initiators and free-radical photoinitiators have been shown to cure effectively at room temperature or under, independently, heating and photo-irradiation. For completeness, in important embodiments, the compositions of the present invention may be substantially free of free-radical initiators.

The or each epoxy acrylate compound present in the composition is preferably an adduct of acrylic acid and a polyepoxide compound. In exemplary embodiments, said polyepoxide is selected from the group consisting of: polyglycidyl ethers of polyhydric alcohols; polyglycidyl ethers of polyhydric phenols; polyglycidyl esters of polycarboxylic acids; and, epoxidized polyethylenically unsaturated hydrocarbons. More particularly, said polyepoxide is a diglycidyl ether selected from the group consisting of: diglycidyl ethers of aliphatic and cycloaliphatic diols; bisphenol A based diglycidylethers; bisphenol F diglycidyl ethers; polyalkyleneglycol based diglycidyl ethers; and, polycarbonatediol based glycidyl ethers.

The or each polythiol compound included in the composition should preferably have from 2 to 5 thiol groups. Independently of, or additional to this functionality, the or each polythiol compound included in the composition should have a weight average molecular weight (Mw) of less than 20,000 daltons, preferably from 200 to 800 daltons.

Exemplary polythiol compounds are polyesters of a thiocarboxylic acid and mention in particular may be made of the use, either alone or in combination, of: pentaerythritol tetramercaptoacetate; pentaerythritol tetrakis(3-mercaptopropionate); trimethylolpropane trimercaptoacetate (TMPMP); tris(2-(mercaptopropionyloxy)ethyl)isocyanate; and, glycol dimercaptoacetate.

The molar ratio term by which the composition is characterized indicates that the thiol groups (-SH) should not be in molar excess to the acrylate groups (H₂C=CHC(O)O-). For completeness, the molar ratio term relates to the total number of acrylate and thiol groups present in the composition. Thus where part c) is present and comprises monomers having acrylate functionality, the molar ratio term of thiol groups to acrylate groups will include contributions from both part a) and part c) of the composition.

In accordance with a second aspect of the invention, there is provided the use of the dual curing composition as defined hereinabove and in the appended claims as a coating, adhesive or sealant. The use of the dual curing composition in composite materials is also envisaged.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C.

The molecular weights referred to in this specification - to describe to macromolecular, oligomeric and polymeric components of the curable compositions - can be measured with gel permeation chromatography (GPC) using polystyrene calibration standards, such as is done according to ASTM 3536.

Viscosities of the compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured.

As used herein, the term *"monomer"* refers to a substance that can undergo a polymerization reaction to contribute constitutional units to the chemical structure of a polymer. The term "*monofunctionaf*"*,* as used herein, refers to the possession of one polymerizable moiety. The term "*polyfunctionaf*"*,* as used herein, refers to the possession of more than one polymerizable moiety.

As used herein, the term *"equivalent (eq.")* relates, as is usual in chemical notation, to the relative number of reactive groups present in the reaction.

The term *"equivalent weight*" as used herein refers to the molecular weight divided by the number of a function concerned. As such, *"epoxy equivalent weight"* (EEW) means the weight of resin, in grams, that contains one equivalent of epoxy.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

The term "*polythiol*" as used herein refers to simple or complex organic compounds having at least two pendant or terminal thiol groups (-SH) per molecule. Such polythiols can generally be represented by the formula R^{t} -(SH)_{c} wherein c is an integer having a value of at least 2 and R^{t} is a polyvalent organic moiety of valence c.

As used herein, the term *"free radical initiator"* refers to any chemical species which, upon exposure to sufficient energy - in the form of light or heat, for example - decomposes into two parts which are uncharged, but which each possess at least one unpaired electron. Thus a thermal free radical initiator generates free upon exposure to heat. And known thermal free radical initiators include, but are not limited to, peroxide compounds, azo compounds and persulfate compounds.

The term *"photoinitiator"* as used herein denotes a compound which can be activated by an energy-carrying activation beam - such as electromagnetic radiation - upon irradiation therewith. Specifically, a *"free-radical photoinitator"* herein refers to a photoactive compound that generates free radicals, which radicals could herein initiate polymerization or reaction by addition to C=C double bonds present in the compositions. Such free-radical photoinitiators are conventionally categorized into Norrish type I and Norrish type II photoinitiators. A Norrish type I radical photoinitiator undergoes the Norrish type I reaction when exposed to actinic radiation: said reaction is defined by IUPAC as α-cleavage of an excited carbonyl compound leading to an acyl-alkyl radical pair (from an acyclic carbonyl compound) or an acyl-alkyl biradical (from a cyclic carbonyl compound) as a primary photoproduct. A Norrish type II radical photoinitiator undergoes the Norrish type II reaction when exposed to actinic radiation: that reaction is defined by IUPAC as the photochemical abstraction of a γ-hydrogen by an excited carbonyl compound to produce a 1,4-biradical as a primary photoproduct.

As used herein, "*C₁-Cₙ alkyl*" group refers to a monovalent group that contains 1 to n carbons atoms, that is a radical of an alkane and includes straight-chain and branched organic groups. As such, a "C₁-C₁₈ *alkyl*" group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "C₁-C₁₈ *hydroxyalkyl*" as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: nonlimiting examples thereof are a methoxy group, an ethoxy group and an iso-propyloxy group. The term "C₁-C₁₈ *alkoxyalkyl*" as used herein refers to an alkyl group having an alkoxy substituent as defined above and wherein the moiety (*alkyl-O-alkyl*) comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂*-*C₄ alkylene"* as used herein, is defined as saturated, divalent hydrocarbon radical having from 2 to 4 carbon atoms.

The term "*C₃* -*C₁₈ cycloalkyf'* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆*-*C₁₈ aryf'* group used alone or as part of a larger moiety - as in *"aralkyl group" -* refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*alkylaryl*" refers to alkyl-substituted aryl groups, both groups being as defined above. Further, as used herein *"aralkyl"* means an alkyl group substituted with an aryl radical as defined above.

The present compositions may be defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) affect on the desired properties of the coating. An exemplary trace amount is less than 1000 ppm by weight of the composition. The term *"substantially free"* expressly encompasses those embodiments where the specified compound, element, ion, or other like component is completely absent from the composition or is not present in any amount measurable by techniques generally used in the art.

### DETAILED DESCRIPTION OF THE INVENTION

### a) Epoxy acrylate Compound

The composition comprises at least one epoxy acrylate compound having at least two acrylate groups in an amount of from 10 to 95 wt.%, based on the weight of said composition: it is preferred that said epoxy acrylate compound constitutes from 20 to 90 wt.%, for example from 40 to 90 wt.% of said composition.

The epoxy acrylate compound is obtainable as the reaction product of acrylic acid with a polyepoxide compound. Without intention to limit the present invention, reactant suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted with acrylic acid, mention may be made of: polyglycidyl ethers of polyhydric alcohols and polyhydric phenols; polyglycidyl esters of polycarboxylic acids; and, epoxidized polyethylenically unsaturated hydrocarbons.

The use of diepoxide compounds is preferred. For instance, suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred reactant polyepoxide compounds include: bisphenol-A epoxy resins; bisphenol-F epoxy resins; bisphenol-A/F epoxy resin blends; polypropylene glycol diglycidyl ethers, such as DER^{™} 732; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

The epoxy acrylate compounds having at least two acrylate groups may of course be obtained from commercial sources. Representative commercial epoxy diacrylates include but are not limited to: the bisphenol A epoxy diacrylate oligomers Ebecryl 3700, Ebecryl 3702 and Ebecryl 3703, available from Daicel-Cytec Company Ltd; the ethoxylated bisphenol A epoxy diacrylate compounds SR601, SR602 and CD9038 available from Sartomer; and, Photomer 3016 available from IGM Resins.

It will be noted that the polyepoxide compounds useful in forming the epoxy acrylate adducts may be monomeric or oligomeric. It is considered that the inclusion of monomeric epoxy acrylates in the present composition will generally yield a cured product having hard, abrasion-resistant characteristics. Conversely, the inclusion of oligomeric multifunctional acrylates will generally yield a slightly softer, but more flexible cured product. Of course, the use of both monomeric and oligomeric epoxy acrylate compounds might balance the desired properties of the cured product.

### b) Polythiol compound

The present composition comprises b) at least one polythiol compound. Herein, the molar ratio of thiol groups (-SH) to acrylate groups (H₂C=CHC(O)O-) is in the range from 0.2:1 to 1:1 and preferably in the range from 0.5:1 to 1:1.

Within that molar ratio condition, the composition comprises, based on the weight of the composition, from 5 to 90 wt.%, preferably from 10 to 80 wt.% of b) said at least one polythiol compound. For example, based on the weight of the composition, the composition may comprise from 10 to 60 wt.%, preferably from 15 to 40 wt.% of b) said at least one polythiol compound.

In a preferred embodiment, the or each polythiol compound included in the composition should possess from 2 to 5 thiol groups, for example from 2 to 4 thiol groups. Independently of or additional to that functionality condition, it is preferred that the or each polythiol compound included in the composition should have a weight average molecular weight (Mw) of less than 20,000 daltons, for instance less than 5000 daltons and preferably from 200 to 800 daltons.

Suitable thiol-group containing compounds, which may be used alone or in combination, include but are not limited to the following.
- Liquid thiol(SH)-terminated polysulfide polymers of which commercial examples include: Thiokol^{®} polymers (available from Morton Thiokol), in particular the types LP-3, LP-33, LP-980, LP-23, LP-55, LP-56, LP-12, LP-31, LP-32 and LP-2 thereof; and, Thioplast^{®} polymers (from Akzo Nobel), in particular the types G10, G112, G131, G1, G12, G21, G22, G44 and G 4.
- Thiol(SH)-terminated polyoxyalkylene ethers, obtainable by reacting polyoxyalkylenedi- and -triols either with epichlorohydrin or with an alkylene oxide, followed by sodium hydrogen sulfide.
- Thiol(SH)-terminated compounds in the form of polyoxyalkylene derivatives, known under the trade name of Capcure^{®} (from Cognis), in particular the types WR-8, LOF and 3-800 thereof.
- Polyesters of thiocarboxylic acids such as mercaptoacetic acid *(thioglycolic acid),* mercaptopropionic acid, mercaptobenzoic acid and mercaptosuccinic acid. Particular examples of such polyesters include: pentaerythritol tetramercaptoacetate; pentaerythritol terakis(3-mercaptopropionate); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as mercaptoacetic acid (thioglycolic acid) and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- Tris(2-(mercaptopropionyloxy)ethyl)isocyanate.

A preference for the use of polyesters of thiocarboxylic acids and, in particular, for the use of at least one of pentaerythritol tetramercaptoacetate, pentaerythritol tetrakis(3-mercaptopropionate), trimethylolpropane trimercaptoacetate (TMPMP), tris(2-(mercaptopropionyloxy)ethyl)isocyanate and glycol dimercaptoacetate is acknowledged.

### c) Ethylenically unsaturated non-ionic monomer

The composition of the present disclosure comprises from 0 to 50 wt.%, based on the weight of said composition, of at least one ethylenically unsaturated non-ionic monomer. It is preferred that the composition comprises from 0 to 30 wt.%, for example from 0 to 20 wt.% of said at least one ethylenically unsaturated non-ionic monomer.

The monomers of this part c) of the composition are distinct from the epoxy acrylate monomers of part a). That aside, such monomers can, in principle, be any other ethylenically unsaturated non-ionic monomer. However, the invention is particularly applicable to compositions of which acrylate monomers constitute at least 60 wt.%, preferably at least 75 wt.% or at least 85 wt.%, of the total amount of ethylenically unsaturated non-ionic monomers present in the composition.

As regards the ability of the present composition to cure at room temperature, it is preferred that part c) is substantially free of ethylenically unsaturated non-ionic monomers having methacrylate functionality.

### C.1 Acrylate Monomer

There is no particular intention to limit the acrylate esters having utility herein and it is considered that the acrylate monomers may be any ester of acrylic acid known to the art. That said, exemplary acrylate monomers include but are not limited to:
- C₁-C₁₈ alkyl esters of acrylic acid, such as methyl acrylate, ethyl acrylate, n-propyl acrylate, isopropyl acrylate, butyl acrylate (all isomers), hexyl acrylate, n-heptyl acrylate, n-octyl acrylate, 2-ethylhexyl acrylate, n-nonyl acrylate, n-decyl acrylate, n-dodecyl acrylate and n-stearyl acrylate;
- C₃-C₁₈ cycloalkyl esters of acrylic acid, such as cyclohexyl acrylate and isobornyl acrylate;
- C₆-C₁₈ aryl esters of acrylic acid, such as phenyl acrylate and tolyl acrylate;
- C₇-C₂₄ aralkyl esters of acrylic acid, such as benzyl acrylate;
- C₁-C₁₈ alkoxyalkyl esters of acrylic acid, such as 2-methoxyethyl acrylate, 2-ethoxyethyl acrylate and 3-methoxybutyl acrylate;
- fluorine-containing C₁-C₁₈ alkyl esters of acrylic acid, such as trifluoromethylmethyl acrylate, 2-trifluoromethylethyl acrylate, 2-perfluoroethylethyl acrylate, 2-perfluoroethyl-2-perfluorobutylethyl acrylate, 2-perfluoroethyl acrylate, perfluoromethyl acrylate, diperfluoromethylmethyl acrylate, 2-perfluoromethyl-2-perfluoroethylmethyl acrylate, 2-perfluorohexylethyl acrylate, 2-perfluorodecylethyl acrylate and 2-perfluorohexadecylethyl acrylate;
- C₁-C₁₈ hydroxyalkyl esters of acrylic acid and in particular C₁-C₆ hydroxyalkyl esters of acrylic acid, such as 2-hydroxyethyl acrylate, 2-hydroxypropyl acrylate and pentaerythritol triacrylate;
- di/poly-esters of di/poly-functional alcohols, such as ethylene glycol diacrylate, 1,3 or 1,4-butanediol diacrylate, 1,6-hexanediol diacrylate and trimethylolpropane triacrylate;
- C₁-C₁₈ aminoalkyl esters of acrylic acid, such as 2-aminoethyl acrylate, dimethylaminoethyl acrylate and acryloxyethoxyethylamine;
- C₁-C₁₈ alkoxysilyl-containing alkyl esters of acrylic acid, such as (3-acryloyloxypropyl)trimethoxysilane;
- ethylene oxide or propylene oxide adducts of acrylic acid; and,
- acrylate esters formed by alcohols bearing other functional groups, such as tetrahydrofurfuryl acrylate.

For completeness, it is not precluded that part c) of the composition comprises a macro-monomer component consisting of one or more oligomers selected from the group consisting of urethane acrylates, polyester acrylates and polyether acrylates. However, such oligomeric compounds - which may be mono- or polyfunctional with respect to the polymerizable acrylate functionality but which are based on repeated structural urethane, ester and ether subunits - should not usually constitute more than 30 wt.% of the total of acrylate monomers in said composition.

As is known in the art, urethane acrylate oligomers may be prepared by reaction of a polyfunctional acrylate bearing a hydroxyl group with a polyisocyanate as defined herein above. In particular, the polyfunctional acrylate bearing a hydroxyl group may be selected from the group consisting of: 2-hydroxyethyl acrylate; 2-hydroxyisopropyl acrylate; 4-hydroxybutyl acrylate; hydroxyethylcaprolactone acrylate; pentaerythritol triacrylate; pentaerythritol tetraacrylate; dipentaerythritol pentaacrylate; dipentaerythritol hexaacrylate; and, combinations thereof.

Suitable polyester acrylate oligomers are obtained by reacting acrylic acid with a polyester prepared from a polybasic acid or an anhydride thereof and a polyhydric alcohol. Examples of the polybasic acid include, but are not limited to: phthalic acid; succinic acid; adipic acid; glutaric acid; sebacic acid; isosebacic acid; tetrahydrophthalic acid; hexahydrophthalic acid; dimer acid; trimellitic acid; pyromellitic acid; pimelic acid; and, azelaic acid. Examples of the polyhydric alcohol include but are not limited to: 1,6-hexanediol; diethylene glycol; 1,2-propylene glycol; 1,3-butylene glycol; neopentyl glycol; dipropylene glycol; polyethylene glycol; and, polypropylene glycol.

As is known in the art, polyether acrylate oligomers may be obtained by an ester exchange reaction between a polyether and an acrylate ester, such as ethyl acrylate. Exemplary polyethers include polyethers obtained from ethoxylated or propoxylated trimethylolpropane, pentaerythritol or the like, or by polyetherification of 1,4-propanediol or the like.

In preferred embodiment, the composition comprises at least one acrylate monomer selected from the group consisting of: methyl acrylate; ethyl acrylate; n-propyl acrylate; isopropyl acrylate; n-butyl acrylate; isobutyl acrylate; tert-butyl acrylate; n-pentyl acrylate; n-hexyl acrylate; cyclohexyl acrylate; n-heptyl acrylate; n-octyl acrylate; 2-ethylhexyl acrylate; nonyl acrylate; decyl acrylate; dodecyl acrylate; phenyl acrylate; tolyl acrylate; benzyl acrylate; 2-methoxyethyl acrylate; 3-methoxybutyl acrylate; 2-hydroxyethyl acrylate; 2-hydroxypropyl acrylate; stearyl acrylate; glycidyl acrylate; isobornyl acrylate; 2-aminoethyl acrylate; y-acryloyloxypropyl trimethoxysilane; acrylic acid-ethylene oxide adduct; trifluoromethylmethyl acrylate; 2-trifluoromethylethyl acrylate; 2-perfluoro ethylethyl acrylate; 2-perfluoroethyl-2-perfluorobutylethyl acrylate; 2-perfluoroethyl acrylate; perfluoromethyl acrylate; diperfluoromethylmethyl acrylate; 2-perfluoromethyl-2-perfluoroethylmethyl acrylate; 2-perfluorohexylethyl acrylate; 2-perfluorodecylethyl acrylate; 2-perfluorohexadecylethyl acrylate; ethoxylated trimethylolpropane triacrylate; trimethylol propane triacrylate; dipentaerythritol monohydroxypentacrylate; pentaerythritol triacrylate; 1,6-hexanedioldiacrylate; neopentyl glycoldiacrylate; pentaerythritol tetraacrylate; 1,2-butylene glycoldiacrylate; trimethylopropane ethoxylate triacrylate; glyceryl propoxylate triacrylate; trimethylolpropane triacrylate; dipentaerythritol monohydroxy pentaacrylate; tripropyleneglycol diacrylate; neopentylglycol propoxylate diacrylate; 1,4-butanediol diacrylate; triethyleneglycol diacrylate; and, butylene glycol diacrylate.

### C.2 Co-Polymerizable Acid

The composition may optionally comprise at least one co-polymerizable acid. When employed, said acid(s) may be added in an amount up to 40 wt.%, for instance up to 25 wt.% of the total amount of ethylenically unsaturated non-ionic monomers present. Said at least one co-polymerizable acid might therefore constitute from 0 to 15 wt.% of the total amount of ethylenically unsaturated non-ionic monomers. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present invention, co-polymerizable acid monomers should be selected from: ethylenically unsaturated carboxylic acids; ethylenically unsaturated sulfonic acids; and; vinylphosphonic acid. Suitable ethylenically unsaturated sulfonic acids are, for instance, vinylsulfonic acid, styrenesulfonic acid and acrylamidomethylpropanesulfonic acid.

Preferably said at least one co-polymerizable acid of the composition comprises or consists of ethylenically unsaturated carboxylic acids selected from the group consisting of: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, said at least one co-polymerizable acid of the composition comprises or consists of ethylenically unsaturated carboxylic acids selected from the group consisting of: methacrylic acid; acrylic acid, itaconic acid; maleic acid; aconitic acid; crotonic acid; fumaric acid; and, mixtures thereof.

### C.3 Further Monomers

It is noted that the present invention does not preclude the presence in the composition of vinyl monomers which can be copolymerized with acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride, vinylidene chloride, allyl chloride and allylalcohol.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalysts; plasticizers; stabilizers including UV stabilizers; antioxidants; reactive diluents; non-reactive diluents; drying agents; adhesion promoters; fungicides; flame retardants; rheological adjuvants; fillers; and, color pigments or color pastes.

Such adjuvants and additives can be used in such combination and proportions as desired, provided they do not adversely affect the nature and essential properties of the composition. While exceptions may exist in some cases, these adjuvants and additives should not *in toto* comprise more than 50 wt.% of the total composition and preferably should not comprise more than 20 wt.% of the composition.

The composition of the present composition may optionally include a Michael addition catalyst, which herein refers to a compound capable of promoting a Michael addition reaction between the polythiol compound and the acrylate group bearing compound(s). Conventionally, Michael addition catalysts include amine-based catalysts, base catalysts and organometallic catalysts, which types may be used alone or in combination. Exemplary amine-based catalysts include: proline; triazabicyclodecene (TBD); diazabicycloundecene (DBU); hexahydro methyl pyrimido pyridine (MTBD); diazabicyclononane (DBN); tetramethylguanidine (TMG); and, triethylenediamine (TEDA). Examples of the base catalysts include: sodium methoxide; sodium ethoxide; potassium t-butoxide; potassium hydroxide; sodium hydroxide; sodium metal; lithium diisopropylamide (LDA); and, butyllithium. Exemplary organometallic catalysts include: ruthenium catalysts such as (cyclooctadiene)(cyclooctatriene)ruthenium and ruthenium hydride; iron catalysts such as iron(III)chloride and iron acetylacetonate; nickel catalysts such as nickel acetylacetonate, nickel acetate and nickel salicylaldehyde; copper catalysts; palladium catalysts; scandium catalysts; lanthanum catalysts; ytterbium catalysts; and, tin catalysts.

Michael addition catalysts may be employed herein in an amount of from 0 to 5 wt.%, for example from 0 to 2 wt.%, based on the weight of the composition. It is however repeated that such Michael addition catalysts need not be present in the composition and indeed, in a preferred embodiment, the composition is substantially free of Michael addition catalysts.

A *"plasticizer"* for the purposes of this invention is a substance that decreases the viscosity of the composition and thus facilitates its processability. Herein the plasticizer may constitute from 0 to 10 wt.% or from 0 to 5 wt.%, based on the total weight of the composition. When present, the plasticizer is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this invention are to be understood as antioxidants, UV stabilizers, thermal stabilizers or hydrolysis stabilizers. Herein stabilizers may constitute *in toto* from 0 to 10 wt.% or 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

The composition of the present disclosure may comprise particulate filler. The desired viscosity of the curable composition formed may be determinative of the amount of filler used. Having regard to that latter consideration, the total amount of fillers should not prevent the composition from being readily applicable by the elected method of application to the composition to a substrate. For example, compositions of the present invention which are intended to be applicable to a specific locus by printing or injection should possess a viscosity of from 1000 to 50,000, preferably from 10,000 to 20,000 mPas.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have an average particle size (d50), as measured by laser diffraction / scattering methods, of from 0.1 to 1000 µm, for example from 1 to 500 µm.

Exemplary fillers include but are not limited to graphite, carbon black, calcium carbonate, calcium oxide, calcium chloride, calcium hydroxide (lime powder), calcium sulphate, fused silica, amorphous silica, precipitated and/or pyrogenic silicic acid, zeolites, bentonites, wollastonite, magnesium carbonate, magnesium sulphate, diatomite, barium sulfate, barium oxide, alumina, aluminium nitride, boron nitride, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers: poly(tetrachloroethylene), poly(chlorotrifluoroethylene) and poly(vinylidene chloride) powders may also be used. And short fibers such as glass fibers, glass filament, polyacrylonitrile, carbon fibers, Kevlar fibers, or polyethylene fibers can also be added.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

The use of core-shell rubber particles as filler is also not precluded. The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The core-shell rubber may be selected from commercially available products, examples of which include: Paraloid TMS-2670J, EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

Fillers which impart thixotropy to the composition may be preferred for many applications: such fillers are also described as rheological adjuvants, e.g. hydrogenated castor oil, fatty acid amides, or swellable plastics such as PVC.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be from 0 to 10 wt.%, for example from 0 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and, sulfonamides.

The above aside, it is preferred that said non-reactive diluents constitute *in toto* less than 10 wt.%, in particular less than 5 wt.% or less than 2 wt.%, based on the total weight of the composition.

### METHODS AND APPLICATIONS

To form the defined curable compositions, the parts are brought together and mixed. It is important that the mixing homogenously distributes the ingredients within the composition: such thorough and effective mixing can be determinative of a homogeneous distribution of any constituent particulate filler or other adjunct material within the polymer matrix obtained following curing.

As is known in the art, to form one component (1K) curable compositions, the elements of the composition are brought together and homogeneously mixed under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in pre-determined amounts without intentional photo-irradiation or heating.

In accordance with the broadest process aspects of the present invention, the above described compositions are applied to a substrate and then cured *in situ.* Prior to applying the compositions, it is often advisable to pre-treat the relevant substrate surfaces to remove foreign matter therefrom: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water.

In some embodiments, the adhesion of the compositions of the present invention to the preferably pre-treated substrate may be facilitated by the application of a primer thereto. Indeed primer compositions may be necessary to ensure efficacious fixture and / or cure times of the compositions on inactive substrates. The skilled artisan will be able to select an appropriate primer.

The compositions are then applied to the optionally pre-treated, optionally primed surfaces of the substrate by conventional application methods such as: brushing; roll coating; doctor-blade application; spraying methods, including but not limited to air-atomized spray, air-assisted spray, airless spray and high-volume low-pressure spray; printing methods, including screen printing; pin transfer; and, syringe application, including by electro-pneumatically controlled syringes. It is recommended that the compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

Where composition is to be cured photo-chemically, the energy source used to initiate the curing of the applied compositions will emit at least one of ultraviolet (UV) radiation, infrared (IR) radiation, visible light, X-rays, gamma rays, or electron beams (e-beam). Subsequent to their application, the compositions may typically be activated in less than 5 minutes, and commonly between 1 and 60 seconds - for instance between 3 and 12 seconds - when irradiated using commercial curing equipment.

Irradiating ultraviolet light should typically have a wavelength of from 150 to 600 nm and preferably a wavelength of from 200 to 450 nm. Useful sources of UV light include, for instance, extra high pressure mercury lamps, high pressure mercury lamps, medium pressure mercury lamps, low intensity fluorescent lamps, metal halide lamps, microwave powered lamps, xenon lamps, UV-LED lamps and laser beam sources such as excimer lasers and argon-ion lasers.

Where an e-beam is utilized to cure the applied composition, standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to sufficiently cure an individual composition - such that a coating thereof becomes fixed, for example - will depend on a variety of factors including the angle of exposure to the radiation and the thickness of a applied composition. Broadly, however, a curing dosage of from 5 to 5000 mJ/cm² may be cited as being typical: curing dosages of from 50 to 500 mJ/cm², such as from 50 to 400 mJ/cm² may be considered highly effective.

The cure chemistry under photo-irradiation is subject to the same rules of thermodynamics as any chemical reaction: the reaction rate may be accelerated by heat or retarded by lower temperatures. Where there exist shadow areas on the substrate to which the composition has been applied, the temperature of that substrate may be elevated above ambient temperature after photo-irradiation to ensure complete shadow cure.

As noted above, the present composition may be cured at room temperature. Equally, the composition may be effected by elevating the temperature of the composition above room temperature. Without intention to limit the present invention, such thermal curing of the applied curable compositions should typically occur at temperatures in the range of from 50°C to 200°C, preferably from 75°C to 175°C or from 100°C to 150°C. Where applicable, the temperature of the curable compositions may be raised above the mixing temperature and / or the application temperature using conventional means, including microwave induction. The elevated temperature may be maintained for up to 60 minutes to ensure complete curing.

For completeness, exemplary substrates to which the compositions of the present invention may be applied include: non-ferrous metallic substrates, such as aluminium, zinc and alloys thereof; ferrous metals, including iron, stainless steel, cold-rolled steel and electro-galvanized steel; engineered plastics; thermoplastic materials such as polyolefins, of which polyethylene (PE) and polypropylene (PP) may be mentioned, polybutylene terephthalate (PBT), polycarbonate (PC) and acrylonitrile butadiene styrene (ABS); paper; cardboard; glass; composites; wood; leather; and, combinations thereof.

It is envisaged that the compositions of the present disclosure may have utility as coatings, adhesives and sealants or in the formation of composite structures.

The following examples are illustrative of the present invention and are not intended to limit the scope of the invention in any way.

### EXAMPLES

The following materials were employed in the Examples:

| | |
|---|---|
| Ebecryl 3703 | Di-functional epoxy acrylate having a molecular weight (Mw) of 850 daltons, available from Daicel-Allnex Ltd. |
| PTMP: | Pentaerythritol tetrakis(3-mercaptopropionate), CAS No.: 7575-23-7, available from Sigma Aldrich. |
| TMPTA: | Trimethylolpropane triacrylate, CAS Number 15625-89-5, available from Sigma Aldrich. |

### Examples 1-2

Compositions were prepared in accordance with Table 1 herein below. The given ingredients were mixed in a speed mixer (1200 rpm; 1 minute) to ensure the formation of a homogenous mixture. The molar ratio of thiol groups (-SH) to acrylate groups (H₂C=CHC(O)O-) in Example 1 was 0.84:1. The molar ratio of thiol groups (-SH) to acrylate groups (H₂C=CHC(O)O-) in Example 2 was 1:1.

**Table 1**

| **Ingredients** | **Example 1 (wt.%)** | **Example 2 (wt.%)** |
|---|---|---|
| Ebecryl 3703 | 80 | 60 |
| PTMP | 20 | 30 |
| TMPTA | | 10 |

The following tests were performed on the exemplary compositions.

Viscosity: This was measured within 5 minutes of mixing the compositions using a Brookfield Viscometer at 25°C and 50% Relative Humidity (RH).

UV Fixture Time: Test specimens were prepared by hand by placing a small drop of the composition on a clean, dry glass microscope slide (76×26×1 mm) at room temperature. A second glass slide was bonded to the first, angled at between 30° and 90°. The specimens were then cured under a high pressure mercury lamp which provided an energy of 100 mW/cm² with a short wavelength output having peaks at 254nm and 365nm. The light source was applied for intervals of 4 to 5 seconds with a shear moment being applied to the slides by hand after the cure interval. Fixture time *(seconds)* was determined when the assembly supported the shearing moment without relative movement of the two slides.

Surface Cure (UV): The compositions were applied to a tack-free glass slide and cured under a high pressure mercury lamp which provided an energy of 100 mW/cm² with a short wavelength output having peaks at 254nm and 365nm. The light source was applied for intervals of 5 seconds over a 60 second period.

Gel Time: In accordance with ASTM Specification D-3451, a piece of aluminum foil was placed on a hot plate and heated to a temperature of 120°C. A small quantity of the composition was dropped onto the heated foil and stroked with a tongue depressor until continuous and readily breakable filaments were formed when the depressor was lifted from the foil. The elapsed time for this to occur was measured in seconds.

Thermal Cure: The composition was thermally cured by heating the samples at 120°C for 15 minutes.

Room Temperature Cure: The composition was cured by holding the samples at 25°C for 3 days.

The results of and observations from these tests are documented in Table 2 herein below.

**Table 2**

| **Tested Condition** | **Example 1** | **Example 2** |
|---|---|---|
| Viscosity at 25°C (MPa.s) | 166400 | 36060 |
| Composition Appearance | Clear amber liquid | Clear amber liquid |
| UV Fixture Time (s) | 4 | 5 |
| Gel Time at 120°C (s) | 60 | 90 |
| Cured Composition Appearance After UV cure (60s, 100 mW/cm²) | Colorless clear solid | Colorless clear solid |
| Cured Composition Appearance After Thermal cure (15 minutes, 120°C) | Colorless clear solid | Colorless clear solid |
| Cured Composition Appearance After Room Temperature cure (3 days, 25°C) | Colorless clear solid | Colorless clear solid |

In view of the foregoing description and example, it will be apparent to those skilled in the art that equivalent modifications thereof can be made without departing from the scope of the claims.

## Claims

1. A dual curing composition comprising, based on the weight of the composition:
from 10 to 95 wt.% of a) at least one epoxy acrylate compound having at least two acrylate groups; and,
from 5 to 90 wt.% of b) at least one polythiol compound,
wherein the composition is **characterized in that** the molar ratio of thiol groups (-SH) to acrylate groups (H₂C=CHC(O)O-) is in the range from 0.2:1 to 1:1, and
wherein the composition is curable either at room temperature, under heating or under photo-irradiation.

2. The dual curing composition according to claim 1 comprising, based on the weight of the composition:
from 20 to 90 wt.%, preferably from 40 to 90 wt.% a) said at least one epoxy acrylate compound having at least two acrylate groups;
from 10 to 80 wt.%, preferably from 10 to 60 wt.% of b) said at least one polythiol compound; and,
from 0 to 50 wt.%, preferably from 0 to 30 wt.% of c) at least one ethylenically unsaturated non-ionic monomer,
wherein the composition is **characterized in that** the molar ratio of thiol groups (-SH) to acrylate groups (H₂C=CHC(O)O-) is in the range from 0.2:1 to 1:1, preferably from 0.5:1 to 1:1.

3. The dual curing composition according to claim 1 or claim 2, wherein said at least one epoxy acrylate compound is an adduct of acrylic acid and a polyepoxide compound.

4. The dual curing composition according to claim 3, wherein said polyepoxide compound has an epoxide equivalent weight of from 100 to 700 g/eq, preferably from 120 to 320 g/eq.

5. The dual curing composition according to claim 3 or claim 4, wherein said polyepoxide is selected from the group consisting of: polyglycidyl ethers of polyhydric alcohols; polyglycidyl ethers of polyhydric phenols; polyglycidyl esters of polycarboxylic acids; and, epoxidized polyethylenically unsaturated hydrocarbons.

6. The dual curing composition according to any one of claims 3 to 5, wherein said polyepoxide is a diglycidyl ether selected from the group consisting of: diglycidyl ethers of aliphatic and cycloaliphatic diols; bisphenol A based diglycidylethers; bisphenol F diglycidyl ethers; polyalkyleneglycol based diglycidyl ethers; and, polycarbonatediol based glycidyl ethers.

7. The dual curing composition according to any one of claims 1 to 6, wherein the or each polythiol compound included in the composition has from 2 to 5 thiol groups.

8. The dual curing composition according to any one of claims 1 to 7, wherein the or each polythiol compound included in the composition has a weight average molecular weight (Mw) of less than 20,000 daltons, preferably from 200 to 800 daltons.

9. The dual curing composition according to any one of claims 1 to 8, wherein part b) comprises or consists of at least one polyester of a thiocarboxylic acid.

10. The dual curing composition according to claim 9, wherein part b) comprises or consists of at least one compound selected from the group consisting of: pentaerythritol tetramercaptoacetate; pentaerythritol tetrakis(3-mercaptopropionate); trimethylolpropane trimercaptoacetate (TMPMP); tris(2-(mercaptopropionyloxy)ethyl)isocyanate; and, glycol dimercaptoacetate.

11. The dual curing composition according to any one of claims 2 to 10 comprising from 5 to 30 wt.% of c) at least one ethylenically unsaturated non-ionic monomer.

12. The dual curing composition according to any one of claims 2 to 11, wherein acrylate monomers constitute at least 60 wt.%, preferably at least 75 wt.%, of the total amount of ethylenically unsaturated non-ionic monomers present in the composition.

13. The dual curing composition according to any one of claims 1 to 12 which is substantially free of free-radical photoinitatiors.

14. The dual curing composition according to any one of claims 1 to 13 which is substantially free of thermal free-radical initiators.

15. Use of the dual curing composition as defined in any one of claims 1 to 14 as a coating, adhesive or sealant.
